# EUROPÄISCHE PATENTSCHRIFT

(11) **EP 3 604 751 B1**
(45) Veröffentlichungstag und Bekanntmachung des Hinweises auf die Patenterteilung: **06.04.2022**
(21) Anmeldenummer: 19188744.7
(22) Anmeldetag: 29.07.2019
(51) Int. Cl.: F01N 3/029, F01N 3/035, F01N 3/20, F01N 3/30, F01N 9/00

(54) **VERFAHREN ZUR ABGASNACHBEHANDLUNG EINES VERBRENNUNGSMOTORS UND ABGASNACHBEHANDLUNGSSYSTEM**
EXHAUST GAS AFTERTREATMENT METHOD FOR A COMBUSTION ENGINE AND EXHAUST GAS AFTERTREATMENT SYSTEM
PROCÉDÉ DE POST-TRAITEMENT DES GAZ D'ÉCHAPPEMENT D'UN MOTEUR À COMBUSTION INTERNE ET SYSTÈME DE POST-TRAITEMENT DES GAZ D'ÉCHAPPEMENT

(30) Priorität: 31.07.2018 DE 102018118565
(43) Veröffentlichungstag der Anmeldung: 05.02.2020
(73) Patentinhaber: Volkswagen AG, 38440 Wolfsburg (DE)
(72) Erfinder: Baron von Ceumern-Lindenstjerna, Falk-Christian, 38124 Braunschweig (DE); Paukner, Stefan, 38442 Wolfsburg (DE); Manz, Michael Alexander, 30855 Langenhagen (DE); Kaack, Michael, 38531 Rötgesbüttel (DE); Gockel, Jens, 59909 Bestwig (DE)
(74) Vertreter: Gulde & Partner

(56) Entgegenhaltungen:
- DE-A1- 4 239 081
- DE-A1- 4 430 965
- DE-A1-102013 013 663
- DE-A1-102015 212 514
- DE-A1-102015 215 373
- DE-A1-102016 206 394

## Beschreibung

Die Erfindung betrifft ein Abgasnachbehandlungssystem für einen Verbrennungsmotor sowie ein Verfahren zur Abgasnachbehandlung eines solchen Verbrennungsmotors gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Dieselmotoren finden aktuell Abgasnachbehandlungssysteme Verwendung, welche einen Oxidationskatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Bei Ottomotoren erfolgt die Abgasreinigung in bekannter Weise über ein oder mehrere Drei-Wege-Katalysator(en), sowie dem Drei-Wege-Katalysator vor- und nachgeschaltete weitere Katalysatoren und gegebenenfalls einen Partikelfilter. Jede Vorrichtung zur katalytischen Abgasreinigung benötigt zum Erreichen einer Wirksamkeit das Überschreiten einer Mindesttemperatur, der sogenannten Light-off-Temperatur. Nachteilig an den bekannten Systemen ist jedoch, dass die Katalysatoren nach einem Kaltstart des Verbrennungsmotors zunächst auf ihre Light-Off-Temperatur aufgeheizt werden müssen, damit die im Abgas enthaltenen limitierten Schadstoffkomponenten in unschädliche Abgaskomponenten konvertiert werden können.

Aus der DE 10 2011 119 163 A1 ist eine Brennvorrichtung zur Anordnung an einem Abgaskanal eines Verbrennungsmotors bekannt, wobei die Brennvorrichtung eine Mehrzahl von metallischen Folien oder keramischen Platten im Abgaskanal umfasst, wobei die Brenneinrichtung ein Porenbrenner aufweist und die metallischen Folien oder keramischen Platten den Abgaskanal in mehrere Brennkammern unterteilen, wobei zwischen dem Porenbrenner und den metallischen Folien oder keramischen Platten eine Mischzone ausgebildet ist, und wobei sich der Strömungsquerschnitt in den durch die metallischen Folien oder keramischen Platten ausgebildeten Brennkammern in Strömungsrichtung derart erweitert, dass ein Rückschlagen der Flammen aus den Brennkammern in Richtung des Porenbrenners unterbunden wird.

Die DE 11 2010 003 098 T5 offenbart einen Abgasbrenner für einen Verbrennungsmotor, wobei der Abgasbrenner senkrecht zum Abgaskanal und stromaufwärts eines Partikelfilters angeordnet ist, und wobei mit dem Abgasbrenner die Abgastemperatur des Verbrennungsmotors vor Eintritt in den Partikelfilter erhöht wird.

Aus der US 2018 / 0093 224 A1 ist eine Abgasnachbehandlungsvorrichtung mit einem OzonGenerator und einem Katalysator bekannt, wobei in dem Katalysator unverbrannte Kohlenstoffpartikel mittels des Ozons aus dem Ozongenerator zu Kohlenstoffdioxid umgesetzt werden.

Aus der DE 1235667 B ist eine Vorrichtung zur Nachverbrennung brennbarer Bestandteile im Abgas einer Brennkraftmaschine bekannt. Dabei ist vorgesehen, dass das Abgas zusammen mit Frischluft in eine Brennkammer eingeleitet und die unverbrannten Abgasbestandteile mit der Frischluft nochmals exotherm umgesetzt werden.

Aus der DE 44 30 965 A1 ist ein Verfahren zur Steuerung der Kraftstoffzufuhr für eine Brennkraftmaschine mit beheizbarem Katalysator bekannt. Dabei wird eine zusätzliche Kraftstoffmenge während eines Betriebes eines Abgasbrenners und während der Sekundärlufteinblasung zum Aufheizen des Katalysators eingespritzt. Die Kraftstoffeinspritzung ist abhängig vom Motorluftmassenstrom und der Sekundärluftmenge, die in das Abgassystem eingeblasen wird.

Die DE 10 2016 206 394 A1 offenbart ein Verfahren zur Abgasnachbehandlung eines Verbrennungsmotors mit einer zweiflutig ausgebildeten Abgasanlage, wobei beide Abgasfluten durch einen gemeinsamen Brenner beheizt werden können. In jeder der Abgasfluten sind ein erster und ein zweiter Katalysator angeordnet, wobei die Lambdaregelung des Verbrennungsmotors und/oder des Brenners zumindest während einer Aufheizphase der Abgasanlage durch eine stromabwärts des zweiten Katalysators angeordnete Lambdasonde erfolgt. Es ist vorgesehen, dass die Abgasanlage insbesondere nach einem Kaltstart des Verbrennungsmotors durch den Brenner erhitzt wird, um die Katalysatoren möglichst schnell auf eine Light-Off-Temperatur zu bringen und eine wirksame Konvertierung der Schadstoffe im Abgas zu ermöglichen.

Aus der DE 42 39 081 A1 ist ein Verfahren zur Abgasentgiftung während der Kaltlaufphase nach dem Starten in Verbindung mit einer auf Lambda =1-geregelten Brenngemischbildung und einer Sekundärlufteinblasung in die Abgasleitung zur Nachverbrennung und Beheizung einer Lambda-Sonde und eines Katalysators bekannt. Dabei wird vorgeschlagen, die Lambda=1-Regelung des Brenngemischs abzuschalten und die Brenngemischbildung in Abhängigkeit von Betriebsparametern der Brennkraftmaschine wie Drehzahl, Drosselklappenstellung und Motortemperatur in der Art zu steuern, dass die Brennkraftmaschine in einem Bereich guten Betriebsverhaltens mit Luftmangel zu betreiben ist. Nachdem die Lambdasonde und der Katalysator wenigstens teilweise ihre Betriebstemperatur erreicht haben, wird Sekundärluft eingeblasen, um ein stöchiometrisches Abgas zu erreichen.

Die DE 10 2015 215 373 A1 offenbart eine Vorrichtung zur Abgasnachbehandlung eines Verbrennungsmotors. Die Vorrichtung umfasst einen aufladbaren, fremdgezündeten Verbrennungsmotor mit einem Frischluftkanal und einen Abgaskanal, wobei im Frischluftkanal ein Verdichter zur Verdichtung der Frischluft und stromab des Verdichters eine Sekundärluftleitung vorgesehen ist, welche den Frischluftkanal mit dem Abgaskanal verbindet, wobei im Abgaskanal ein Drei-Wege-Katalysator und stromab des Drei-Wege-Katalysators ein Partikelfilter angeordnet ist.

Aus der DE 10 2015 212 514 A1 sind ein Verfahren und eine Vorrichtung zur Abgasnachbehandlung einer Brennkraftmaschine bekannt, bei der in einem Abgaskanal ein Drei-Wege-Katalysator und ein in Strömungsrichtung des Abgases nachfolgenden Partikelfilter angeordnet sind. Dabei wird stromabwärts des Drei-Wege-Katalysators und stromaufwärts des Partikelfilters Sekundärluft in den Abgaskanal eingeblasen, um den Partikelfilter bei einem stöchiometrischen Betrieb der Brennkraftmaschine regenerieren zu können.

Ferner offenbart die DE 10 2013 013 663 A1 ein Verfahren zum Betreiben einer Antriebseinrichtung mit einer Brennkraftmaschine, mit einer an die Brennkraftmaschine angeschlossenen Abgasanlage, die wenigstens einen Katalysator aufweist, und mit einer Heizeinrichtung zum Erzeugen eines Warmluftstroms. Dabei ist vorgesehen, dass in einer ersten Betriebsart ein Frischluftstrom als Kaltluftstrom mittels der Heizeinrichtung erwärmt und dann in Form des Warmluftstroms dem Katalysator zugeführt wird, dass in einer zweiten Betriebsart der Frischluftstrom als Kaltfrischluftstrom dem Katalysator zugeführt wird, und dass in einer dritten Betriebsart ein als der Kaltluftstrom vorliegender erster Anteil des Frischluftstroms mittels der Heizeinrichtung erwärmt sowie dann in Form des Warmluftstroms dem Katalysator zugeführt wird und ein als der Kaltfrischluftstrom vorliegender zweiter Anteil des Frischluftstroms stromaufwärts des Katalysators zum Einstellen einer bestimmten Temperatur mit dem Warmluftstrom vermengt wird.

Nachteilig an den bekannten Lösungen ist jedoch, dass sie entweder sehr komplex sind und/oder sehr viel Bauraum benötigen.

Aufgabe der Erfindung ist es, eine Abgasnachbehandlungsvorrichtung und ein Verfahren zur Abgasnachbehandlung vorzuschlagen, mit welcher limitierte Abgaskomponenten wie unverbrannte Kohlenwasserstoffe (HC), Kohlenmonoxid (CO) vor Erreichen der Light-Off-Temperatur der katalytisch wirksamen Oberflächen umgesetzt werden können und somit insbesondere in der Kaltstartphase des Verbrennungsmotors die Emissionen verringert werden können.

Erfindungsgemäß wird diese Aufgabe durch ein Verfahren zur Abgasnachbehandlung eines Verbrennungsmotors, welcher auslassseitig mit einer Abgasanlage verbunden ist, gelöst, wobei in der Abgasanlage ein erster Drei-Wege-Katalysator, stromabwärts des ersten Drei-Wege-Katalysators ein NOx-Speicherkatalysator und stromabwärts des NOx-Speicherkatalysators ein Vier-Wege-Katalysator oder ein Partikelfilter angeordnet sind, und wobei an einem Abgaskanal der Abgasanlage stromabwärts des NOx-Speicherkatalysators und stromaufwärts des Vier-Wege-Katalysators oder des Partikelfilters eine Einleitstelle zur Einleitung eines heißen Gases ausgebildet ist. Das Verfahren umfasst folgende Schritte:
- Betreiben des Verbrennungsmotors mit einem Kraftstoff-Luft-Gemisch bei einem unterstöchiometrischen Verbrennungsluftverhältnis,
- Einleiten der Abgase des Verbrennungsmotors in den Abgaskanal,
- Einleiten eines heißen, sauerstoffreichen Gases an einer Einleitstelle in den Abgaskanal, wobei sich das heiße Gas mit dem Abgas des Verbrennungsmotors in einer Mischzone vermischt, sodass sich stromabwärts der Mischzone ein stöchiometrisches oder überstöchiometrisches Abgas einstellt,
- Oxidation der unverbrannten Abgaskomponenten, insbesondere von unverbrannten Kohlenwasserstoffen (HC), Kohlenmonoxid (CO), Wasserstoff (H₂), in einer Reaktionszone (48) stromabwärts der Mischzone, wobei die unverbrannten Abgaskomponenten mit dem Restsauerstoff im Mischgas umgesetzt werden, wobei
- der NOx-Speicherkatalysator durch das unterstöchiometrische Verbrennungsluftverhältnis des Verbrennungsmotors regeneriert wird.

Jede Vorrichtung zur katalytischen Abgasreinigung benötigt zum Erreichen einer Wirksamkeit das Überschreiten einer Mindesttemperatur, der sogenannten Light-off-Temperatur. Ist diese Temperatur nach einem Kaltstart des Verbrennungsmotors noch nicht erreicht, so verlassen die schädlichen Abgaskomponenten des Abgases des Verbrennungsmotors die Abgasanlage und werden an die Umwelt emittiert. Daher sind insbesondere in der Kaltstartphase die Emissionen besonders hoch. Durch ein erfindungsgemäßes Verfahren können die unverbrannten Abgaskomponenten bereits, bevor einer der Katalysatoren seine Light-Off-Temperatur erreicht hat, im Abgaskanal mit dem heißen Gas umgesetzt werden. Dadurch können die Abgasemissionen insbesondere in der Kaltstartphase des Verbrennungsmotors verringert und die schädlichen Abgaskomponenten unabhängig von der Temperatur des Katalysators umgesetzt werden.

Durch die in den abhängigen Ansprüchen aufgeführten Merkmale sind vorteilhafte Weiterentwicklungen und Verbesserungen des im unabhängigen Patentanspruch angegebenen Verfahrens zur Abgasnachbehandlung möglich.

Erfindungsgemäß ist vorgesehen, dass der Verbrennungsmotor mit einem unterstöchiometrischen Verbrennungsluftverhältnis betrieben wird und das heiße Gas sauerstoffreich ist. Durch einen unterstöchiometrischen Betrieb können zum einen die Rohemissionen in Bezug auf Stickoxide minimiert werden. Ferner können die unverbrannten Abgaskomponenten, insbesondere unverbrannte Kohlenwasserstoffe (HC), Kohlenmonoxid (CO), Methan (CH₄) und Wasserstoff (H₂) durch das heiße sauerstoffreiche Gas oxidiert werden, sodass die Emissionen minimiert werden können.

In einer bevorzugten Anwendung des Verfahrens ist vorgesehen, dass das unterstöchiometrische Verbrennungsluftverhältnis bei einer Anreicherung in einer Beschleunigungsphase oder Volllastphase des Verbrennungsmotors eingestellt wird. In bestimmten Betriebspunkten des Verbrennungsmotors kann zur Leistungssteigerung und/oder um kritische Spitzentemperaturen zu vermeiden, ein Anreicherung des Verbrennungsluftverhältnisses in Richtung eines unterstöchiometrischen Verbrennungsluftverhältnisses vorgesehen sein. In einer solchen Betriebsphase kann die Abgasnachbehandlung durch ein erfindungsgemäßes Verfahren unterstützt werden, um die Oxidation der unverbrannten Abgaskomponenten zu unterstützen.

Erfindungsgemäß ist vorgesehen, dass das unterstöchiometrische Verbrennungsluftverhältnis zur Regeneration eines NOx-Speicherkatalysators oder zur Entschwefelung eines solchen Katalysators, gewählt wird. Zur Regeneration eines NOx-Speicherkatalysators oder zur Entschwefelung eines solchen Katalysators ist ein unterstöchiometrischer Betrieb des Verbrennungsmotors notwendig. Da gerade eine Entschwefelung einen vergleichsweise langen unterstöchiometrischen Betrieb des Verbrennungsmotors erfordert, muss hier in den aus dem Stand der Technik bekannten Verfahren häufig zwischen einen unterstöchiometrischen Betrieb und einem stöchiometrischen Normalbetrieb gewechselt werden, da die Sauerstoffspeicherfähigkeit des Washcoats eines Katalysators zu gering für einen derart langen unterstöchiometrischen Betrieb ist. Um die Abgasnachbehandlung in einer solchen unterstöchiometrischen Betriebsphase zu unterstützen, kann ebenfalls ein erfindungsgemäßes Verfahren eingesetzt werden.

In einer weiteren bevorzugten Anwendung des Verfahrens ist vorgesehen, dass der unterstöchiometrische Betrieb zum Bauteilschutz eines Bauteils des Verbrennungsmotors und/oder der Abgasanlage gewählt wird. Um in bestimmten Betriebssituationen eine thermische Überbelastung eines Bauteils des Verbrennungsmotors, insbesondere der Auslassventile, oder eine thermische Überbelastung einer Komponente der Abgasanlage, insbesondere der Turbine des Abgasturboladers oder eines Katalysators zu vermeiden, kann ebenfalls eine Anreicherung des Verbrennungsluftverhältnisses in Richtung eines unterstöchiometrischen Verbrennungsluftverhältnisses vorgesehen sein. Durch ein erfindungsgemäßes Verfahren, insbesondere durch ein Einleiten des heißen Gases stromabwärts der zu schützenden Komponente, können die Emissionen auch bei einer Anreicherung zum Bauteilschutz verringert werden.

In einer weiteren bevorzugten Anwendung des Verfahrens ist vorgesehen, dass das erfindungsgemäße Verfahren in einer Kaltstartphase des Verbrennungsmotors durchgeführt wird, in welcher ein oder mehrere in der Abgasanlage angeordnete Katalysatoren, insbesondere ein Drei-Wege-Katalysator, noch nicht seine/ihre Light-off-Temperatur erreicht hat/haben. Da in der Kaltstartphase noch keine Konvertierung der Schadstoffe an den katalytisch wirksamen Flächen der Abgasnachbehandlungskomponenten möglich ist, ist das vorgeschlagene Verfahren insbesondere in dieser Kaltstartphase dazu geeignet, die Emissionen des Verbrennungsmotors durch eine Oxidation der unverbrannten Abgaskomponenten zu verringern.

In einer weiteren Verbesserung des Verfahrens ist vorgesehen, dass das Einleiten des heißen Gases deaktiviert wird, sobald eine Abgasnachbehandlung mittels der Abgasnachbehandlungskomponenten möglich ist. Da die zur Erzeugung des heißen Gases benötigte Energie den Wirkungsgrad des Verbrennungsmotors senkt, kann durch ein rechtzeitiges Einstellen des Verfahrens Kraftstoff eingespart und die Gesamteffizienz des Verbrennungsmotors erhöht werden.

In einer bevorzugten Ausführungsform des Verfahrens ist vorgesehen, dass ein Mischungsverhältnis von heißem Gas und Abgas des Verbrennungsmotors gewählt wird, bei dem sich in der Reaktionszone eine Temperatur von mindestens 650°C einstellt. Oberhalb von einer Temperatur von etwa 650°C ist keine zusätzliche katalytisch wirksame Oberfläche notwendig, um die unverbrannten Kraftstoffkomponenten im Abgaskanal zu oxidieren. Somit kann eine Konvertierung direkt in der Reaktionszone im Abgaskanal stattfinden. Dabei kann der Strömungswiderstand gering gehalten werden, da keine zusätzlichen Abgasnachbehandlungskomponenten notwendig sind, welche den Abgasgegendruck erhöhen würden.

Erfindungsgemäß wird ein Abgasnachbehandlungssystem für einen Verbrennungsmotor mit einer Abgasanlage vorgeschlagen, wobei in der Abgasanlage mindestens eine Abgasnachbehandlungskomponente angeordnet ist und wobei an einem Abgaskanal der Abgasanlage eine Einleitstelle zur Einleitung eines heißen Gases ausgebildet ist. Es ist vorgesehen, dass das Abgasnachbehandlungssystem ein Steuergerät umfasst, wobei das Steuergerät eingerichtet ist, ein erfindungsgemäßes Verfahren zur Abgasnachbehandlung eines Verbrennungsmotors durchzuführen, wenn ein maschinenlesbarer Programmcode durch das Steuergerät ausgeführt wird. Durch ein vorgeschlagenes Abgasnachbehandlungssystem kann auf einfache Art und Weise ein erfindungsgemäßes Verfahren zur Abgasnachbehandlung umgesetzt werden.

Erfindungsgemäß ist vorgesehen, dass das heiße Gas von einem Abgasbrenner erzeugt wird. Ein Abgasbrenner bietet eine einfache und vergleichsweise kostengünstige Lösung, um das heiße Gas für das erfindungsgemäße Verfahren zur Abgasnachbehandlung bereitzustellen. Zudem weist ein Abgasbrenner nur einen geringen Bauraumbedarf auf und lässt sich, insbesondere bei einer Positionierung der Einleitstelle in einer Unterbodenposition eines Kraftfahrzeuges, mit vergleichsweise wenig Aufwand in eine Abgasanlage integrieren.

In einer vorteilhaften Ausführungsform des Abgasnachbehandlungssystems ist vorgesehen, dass in der Mischzone ein Mischelement angeordnet ist. Durch ein Mischelement kann die Vermischung von Abgas und heißem Gas verbessert werden, wodurch ein homogeneres Mischgas entsteht. Dadurch kann die Reaktionsgeschwindigkeit bei der Oxidation der unverbrannten Abgaskomponenten gesteigert und somit die Wirksamkeit des Abgasnachbehandlungssystems verbessert werden.

In einer weiteren Verbesserung des Abgasnachbehandlungssystems ist vorgesehen, dass in der Mischzone und/oder in der Reaktionszone ein Element zur Reduzierung der Strömungsgeschwindigkeit des Mischgases im Abgaskanal angeordnet ist. Um eine möglichst effiziente Oxidation der unverbrannten Abgaskomponenten zu erreichen, ist eine hinreichende Verweildauer des Mischgases in der Reaktionszone notwendig. Daher ist es zielführend die Strömungsgeschwindigkeit in diesem Abgaskanalabschnitt entsprechend abzusenken.

Besonders bevorzugt ist dabei, dass der Abgaskanal im Bereich der Reaktionszone eine Querschnittsaufweitung aufweist. Eine besonders einfache und kostengünstige Möglichkeit, die Strömungsgeschwindigkeit abzusenken, ist eine Querschnittsaufweitung des Abgaskanals in der Reaktionszone. Dabei ist der Abgaskanal vorzugsweise als Diffusor ausgebildet. Alternativ oder zusätzlich können auch weitere Elemente vorgesehen sein, um den Abgaskanalquerschnitt zumindest teilweise zu versperren und das Mischgas an einem Abströmen aus der Reaktionszone zu hindern.

In einer bevorzugten Ausführungsform des Abgasnachbehandlungssystems ist vorgesehen, dass die mindestens eine Komponente zur Abgasnachbehandlung einen Drei-Wege-Katalysator, einen NOx-Speicherkatalysator, einen Partikelfilter und/oder einen Vier-Wege-Katalysator umfasst. Der Verbrennungsmotor ist vorzugsweise als fremdgezündeter Verbrennungsmotor nach dem Ottoprinzip ausgeführt. Um eine effiziente Abgasnachbehandlung zu erreichen, sind vorzugsweise ein Drei-Wege-Katalysator und ein Partikelfilter oder ein Vier-Wege-Katalysator in der Abgasanlage angeordnet. Somit können neben den limitierten gasförmigen Emissionen auch die Partikelemissionen des Verbrennungsmotors reduziert werden.

In einer bevorzugten Ausführungsform ist vorgesehen, dass die Einleitstelle stromabwärts eines ersten Drei-Wege-Katalysators und stromaufwärts eines zweiten Bauteils mit Drei-Wegekatalytischer Wirkung, insbesondere einem weiteren Drei-Wege-Katalysator oder einem Vier-Wege-Katalysator, ausgebildet ist. Dadurch kann der motornahe erste Drei-Wege-Katalysator durch innermotorische Maßnahmen und ein weiterer Drei-Wege-Katalysator oder ein Vier-Wege-Katalysator in Unterbodenlage eines Kraftfahrzeuges über das heiße Gas im Wesentlichen unabhängig vom Abgasstrom beheizt werden. Somit kann die Zeit verkürzt werden, bis zumindest einer der Katalysatoren nach einem Kaltstart des Verbrennungsmotors seine Light-Off-Temperatur erreicht hat.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit den gleichen Bezugszeichen gekennzeichnet. Es zeigen:
- Figur 1: einen Verbrennungsmotor mit einem erfindungsgemäßen Abgasnachbehandlungssystem;
- Figur 2: einen Ausschnitt aus dem Abgaskanal eines erfindungsgemäßen Abgasnachbehandlungssystems und
- Figur 3: ein Ablaufdiagramm zur Durchführung eines erfindungsgemäßen Verfahrens zur Abgasnachbehandlung eines Verbrennungsmotors.

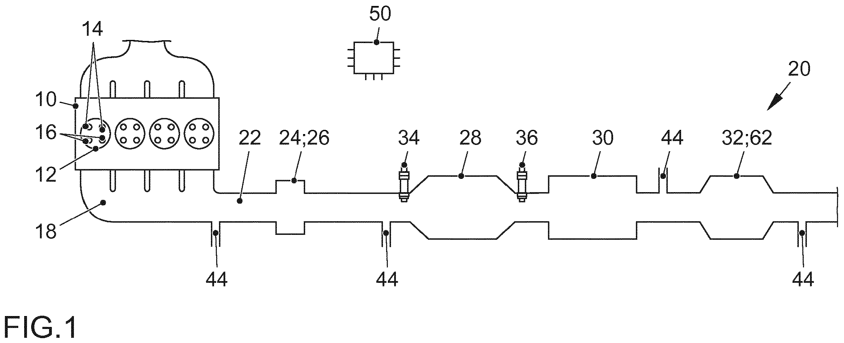

Figur 1 zeigt einen Verbrennungsmotor 10 mit einem erfindungsgemäßen Abgasnachbehandlungssystem in einer schematischen Darstellung. Der Verbrennungsmotor 10 weist eine Mehrzahl von Brennräumen 12 auf, an welchen jeweils mindestens ein Einlassventil 14 und ein Auslassventil 16 angeordnet ist. Der Verbrennungsmotor 10 weist einen Einlass auf, mit welchem der Verbrennungsmotor 10 mit einem aus Gründen der Übersichtlichkeit nicht dargestellten Luftversorgungssystem verbindbar ist. Der Verbrennungsmotor 10 weist ferner einen Abgasfächer 18 auf, mit welchem der Verbrennungsmotor 10 mit einer Abgasanlage 20 verbunden ist, derart, dass ein Abgas aus den Brennräumen 12 des Verbrennungsmotors 10 bei geöffneten Auslassventilen 16 in die Abgasanlage 20 geleitet werden kann. Die Abgasanlage 20 umfasst einen Abgaskanal 22, in welchem in Strömungsrichtung eines Abgases 52 des Verbrennungsmotors 10 durch den Abgaskanal 22 eine Turbine 26 eines Abgasturboladers 24, stromabwärts der Turbine 26 ein Drei-Wege-Katalysator 28, stromabwärts des Drei-Wege-Katalysators 28 und weiter stromabwärts ein Partikelfilter 62 oder ein Vier-Wege-Katalysator 32 angeordnet sind. Zusätzlich ist stromabwärts des Drei-Wege-Katalysators 28 und stromaufwärts des Partikelfilters 62 oder des Vier-Wege-Katalysators 32 ein NOx-Speicherkatalysator 30 angeordnet. Der Drei-Wege-Katalysator 28 ist vorzugsweise als erste Komponente der Abgasnachbehandlung in einer motornahen Position in der Abgasanlage 20 angeordnet. Unter einer motornahen Position wird in diesem Zusammenhang eine Position mit einer Abgaslauflänge von weniger als 80 cm, vorzugsweise von weniger als 50 cm, ab dem Abgasfächer 18 des Verbrennungsmotors 10 verstanden. Der Partikelfilter 62 oder der Vier-Wege-Katalysator 32 ist vorzugsweise in einer Unterbodenposition eines Kraftfahrzeuges angeordnet. Ferner kann ein elektrisches Heizelement vorgesehen sein, mit welchem zumindest einer der Katalysatoren 28, 30, 32 oder der Partikelfilter 62 elektrisch beheizbar ist.

Stromabwärts der Turbine 26 des Abgasturboladers 24 und stromaufwärts des Drei-Wege-Katalysators 28 ist im Abgaskanal 22 eine erste Lambdasonde 34 angeordnet. Die erste Lambdasonde 34 ist vorzugsweise als Breitbandsonde ausgeführt und ermöglicht somit eine quantitative Beurteilung des Verbrennungsluftverhältnisses stromaufwärts des Drei-Wege-Katalysators 28. Stromabwärts des Drei-Wege-Katalysators 28 und stromaufwärts des zweiten Katalysators 30 ist im Abgaskanal 22 eine zweite Lambdasonde 36 vorgesehen, welche vorzugsweise als Sprungsonde ausgeführt ist. Über die beiden Lambdasonden 34, 36 ist eine Regelung des Verbrennungsluftverhältnisses des Verbrennungsmotors 10 möglich. Ferner ist an dem Abgaskanal 22 zumindest eine Einleitstelle 44 zum Einleiten eines heißen Gases 54 in den Abgaskanal 22 vorgesehen. Erfindungsgemäß ist die Einleitstelle 44 stromabwärts des ersten Drei-Wege-Katalysators 28 und stromaufwärts des Vier-Wege-Katalysators 32 oder eines weiteren Drei-Wege-Katalysators angeordnet. Dabei kann der erste, motornahe Drei-Wege-Katalysator 28 durch innermotorische Heizmaßnahmen beheizt werden und der Vier-Wege-Katalysator 32 oder der weitere Drei-Wege-Katalysator mit dem heißen Gas 54 aus einem Abgasbrenner 42. Bevorzugt ist eine Einleitung des heißen Gases 54 stromaufwärts eines Partikelfilters 62, um das heiße Gas zusätzlich zur Aufheizung des Partikelfilters 62 bei einer Partikelfilterregeneration nutzen zu können.

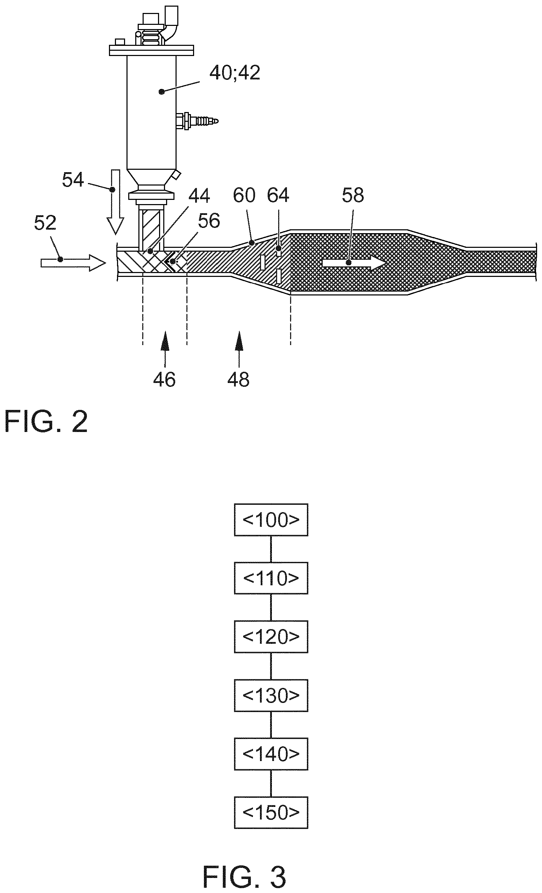

In Figur 2 ist ein Abschnitt des Abgaskanals 22 mit einer Einleitstelle 44 zum Einleiten eines heißen Gases in den Abgaskanal 22 dargestellt. Das heiße Gas 54 wird durch einen Heißgaserzeuger 40, vorzugsweise durch einen in Figur 2 dargestellten Abgasbrenner 42, durch die Verbrennung eines Kraftstoff-Luft-Gemischs erzeugt. Dabei ist im Abgaskanal 22 eine Mischzone 46 vorgesehen, an welcher sich das heiße Gas aus dem Heißgaserzeuger 40 mit dem Abgas 52 des Verbrennungsmotors 10 vermischt. Um die Vermischung von dem heißen Gas 54 und dem Abgas 52 zu verbessern, kann in der Mischzone ein Mischelement 56 vorgesehen sein, welches die Strömung in dem Abgaskanal 22 derart umlenkt und/oder verwirbelt, dass die Vermischung des Abgases 52 und des heißen Gases 54 zu einem Mischgas 58 fördert. Stromabwärts der Mischzone 46 schließt sich im Abgaskanal 22 eine Reaktionszone 48 an, in welcher die unverbrannten Abgaskomponenten mit dem Restsauerstoff aus dem Mischgas 58 reagieren und somit in unlimitierte Abgaskomponenten oxidiert werden. Dabei sind der Heißgaserzeuger 40 und die Mischzone 46 im Abgaskanal 22 derart ausgelegt, dass eine Nachverbrennung der oxidierbaren Abgaskomponenten, insbesondere von Kohlenstoffmonoxid, unverbrannten Kohlenwasserstoffen, Methan oder Wasserstoff auch ohne eine katalytische Oberfläche möglich ist. Ziel der Mischzone 46 ist eine gleichmäßige Vermischung des Abgases 52 mit dem heißen Gas 54, damit in der nachfolgenden Reaktionszone 48 eine bestmögliche Oxidation dieser Abgaskomponenten stattfinden kann. Im Abgaskanal 22 kann in der Mischzone 46 und/oder in der Reaktionszone 48 ein Element 64 zur Reduzierung der Strömungsgeschwindigkeit angeordnet sein. In einer sehr einfachen Ausführungsform ist eine Querschnittserweiterung 60 des Abgaskanals 22 in der Reaktionszone 48 vorgesehen, um die Strömungsgeschwindigkeit in dieser Zone 48 abzusenken.

Die Reaktionszone 48 ist so auszuführen, dass eine ausreichende Verweilzeit des Mischgases 58 für eine weitgehende Oxidation der unverbrannten Abgaskomponenten sichergestellt ist. Die Menge und die Temperatur des heißen Gases 54 werden dabei so gewählt, dass sich für das Mischgas 58 in der Reaktionszone 48 eine Temperatur oberhalb von 650°C einstellt. Das Luftverhältnis des Mischgases 58 ist vorzugsweise sauerstoffreich (also überstöchiometrisch), sodass sich auch bei einem unterstöchiometrischen Verbrennungsluftverhältnis in den Brennräumen 12 des Verbrennungsmotors 10 in der Reaktionszone 48 ein stöchiometrisches oder überstöchiometrisches Mischgas einstellt.

In Figur 3 ist ein Ablaufdiagramm eines erfindungsgemäßen Verfahrens zur Abgasnachbehandlung eines Verbrennungsmotors 10 dargestellt. In einem ersten Verfahrensschritt <100> wird der Verbrennungsmotor 10 mit einem Kraftstoff-Luft-Gemisch betrieben und das Abgas 52 des Verbrennungsmotors 10 in den Abgaskanal 22 der Abgasanlage 20 eingeleitet. In einem zweiten Verfahrensschritt <110> werden die Betriebsbedingungen des Verbrennungsmotors 10, sowie die Temperatur der Abgasnachbehandlungskomponenten 28, 30, 32, 62 bestimmt. Liegt die Temperatur der Abgasnachbehandlungskomponenten 28, 30, 32, 62, insbesondere die Temperatur des Drei-Wege-Katalysators 28 oder des Vier-Wege-Katalysators 32 unter ihrer Light-Off-Temperatur, oder ist aus sonstigen Gründen eine vollständige Umsetzung der unverbrannten Abgaskomponenten durch die Katalysatoren 28, 32 nicht möglich, wird in einem Verfahrensschritt <120> heißes Gas 54 durch den Heißgaserzeuger 40 erzeugt und an der Einleitstelle 44 in den Abgaskanal 22 eingeleitet. Das heiße Gas 54 vermischt sich in einem Verfahrensschritt <130> mit dem Abgas 52 des Verbrennungsmotors 10 zu einem Mischgas 58. In einem Verfahrensschritt <140> werden die unverbrannten Abgaskomponenten HC, CO, CH₄, H₂ mit dem Restsauerstoff aus dem Mischgas 58 exotherm umgesetzt. Sobald die Abgasnachbehandlungskomponenten 28, 30, 32, 62 ihre Light-Off-Temperatur erreicht haben, wird in einem Verfahrensschritt <150> das Einbringen des heißen Gases 54 wieder deaktiviert und es erfolgt eine Abgasnachbehandlung mit konventionellen, aus dem Stand der Technik bekannten Methoden.

Neben einem Kaltstart des Verbrennungsmotors 10, bei welchem die Katalysatoren 28, 30, 32, 62 noch nicht ihre Light-Off-Temperatur erreicht haben, kann das vorgeschlagene Verfahren insbesondere bei einer Anfettung des Kraftstoff-Luft-Gemischs in den Brennräumen 12 des Verbrennungsmotors 10 bei einer Beschleunigung oder im Volllastbetrieb des Verbrennungsmotors 10 erfolgen. Ferner kann ein erfindungsgemäßes Verfahren bei einer Anfettung zum Bauteilschutz eines Bauteils des Verbrennungsmotors 10, insbesondere zum Schutz der Auslassventile 16 oder zum Schutz einer Abgasnachbehandlungskomponente, insbesondere zum Schutz der Turbine 26, zum Schutz des Drei-Wege-Katalysators 28, des Vier-Wege-Katalysators 32 oder des Partikelfilters 62 erfolgen. Darüber hinaus ist eine Anfettung des Kraftstoff-Luft-Gemischs zur Regeneration einer Abgasnachbehandlungskomponente, insbesondere zur Regeneration oder zur Entschwefelung eines NOx-Speicherkatalysators 30 oder zur Unterdrückung einer unerwünschten Regeneration des Partikelfilters 62 oder des Vier-Wege-Katalysators 32 vorgesehen. In diesen Betriebssituationen können die unverbrannten Abgaskomponenten durch das erfindungsgemäße Verfahren oxidiert werden, ohne dass dafür eine katalytisch wirksame Oberfläche eines der Katalysatoren 28, 30, 32 notwendig wäre.

### Bezugszeichenliste

- 10: Verbrennungsmotor
- 12: Brennraum
- 14: Einlassventile
- 16: Auslassventile
- 18: Abgasfächer

- 20: Abgasanlage
- 22: Abgaskanal
- 24: Abgasturbolader
- 26: Turbine
- 28: Drei-Wege-Katalysator

- 30: NOx-Speicherkatalysator
- 32: Vier-Wege-Katalysator
- 34: erste Lambdasonde
- 36: zweite Lambdasonde

- 40: Heißgaserzeuger
- 42: Abgasbrenner
- 44: Einleitstelle
- 46: Mischzone
- 48: Reaktionszone

- 50: Steuergerät
- 52: Abgas
- 54: heißes Gas
- 56: Mischelement
- 58: Mischgas

- 60: Querschnittsaufweitung
- 62: Partikelfilter
- 64: Element zur Reduzierung der Strömungsgeschwindigkeit

## Patentansprüche

1. Verfahren zur Abgasnachbehandlung eines Verbrennungsmotors (10), welcher auslassseitig mit einer Abgasanlage (20) verbunden ist, wobei in der Abgasanlage (20) ein erster Drei-Wege-Katalysator (28), stromabwärts des ersten Drei-Wege-Katalysators (28) ein NOx-Speicherkatalysator (30) und stromabwärts des NOx-Speicherkatalysators (30) ein Vier-Wege-Katalysator (32) oder ein Partikelfilter (62) angeordnet sind, wobei an einem Abgaskanal (22) der Abgasanlage (20) stromabwärts des NOx-Speicherkatalysators (30) und stromaufwärts des Vier-Wege-Katalysators (32) oder des Partikelfilters (62) eine Einleitstelle (44) zur Einleitung eines durch einen Abgasbrenner (42) erzeugten heißen Gases (54) ausgebildet ist, umfassend folgende Schritte:
- Betreiben des Verbrennungsmotors (10) mit einem Kraftstoff-Luft-Gemisch bei einem unterstöchiometrischen Verbrennungsluftverhältnis (λ < 1),
- Einleiten der Abgase (52) des Verbrennungsmotors (10) in den Abgaskanal (22),
- Einleiten eines heißen, sauerstoffreichen Gases (54) an einer Einleitstelle (44) in den Abgaskanal (22), wobei sich das heiße Gas (54) mit dem Abgas (52) des Verbrennungsmotors (10) in einer Mischzone (46) vermischt, sodass sich stromabwärts der Mischzone (46) ein stöchiometrisches oder überstöchiometrisches Abgas einstellt, und
- Oxidation der unverbrannten Abgaskomponenten des Abgases des Verbrennungsmotors (10) in einer Reaktionszone (48) stromabwärts der Mischzone (46), wobei die unverbrannten Abgaskomponenten mit dem Restsauerstoff im Mischgas umgesetzt werden, wobei
- der NOx-Speicherkatalysator (30) durch das unterstöchiometrische Verbrennungsluftverhältnis des Verbrennungsmotors (10) regeneriert wird.

2. Verfahren zur Abgasnachbehandlung nach Anspruch 1, **dadurch gekennzeichnet, dass** das unterstöchiometrische Verbrennungsluftverhältnis bei einer Anreicherung in einer Beschleunigungsphase oder Volllastphase des Verbrennungsmotors eingestellt wird.

3. Verfahren zur Abgasnachbehandlung nach Anspruch 1 oder 2, **dadurch gekennzeichnet, dass** der unterstöchiometrische Betrieb zum Bauteilschutz eines Bauteils des Verbrennungsmotors (10) und/oder der Abgasanlage (20) gewählt wird.

4. Verfahren zur Abgasnachbehandlung nach einem der Ansprüche 1 bis 3, **dadurch gekennzeichnet, dass** das Verfahren in einer Kaltstartphase des Verbrennungsmotors (10) durchgeführt wird, in welcher ein in der Abgasanlage (20) angeordneter Katalysator (28, 30, 32) noch nicht seine Light-Off-Temperatur erreicht hat.

5. Verfahren zur Abgasnachbehandlung nach Anspruch 4, **dadurch gekennzeichnet, dass** das Einleiten des heißen Gases (54) deaktiviert wird, sobald eine Abgasnachbehandlung mittels der Abgasnachbehandlungskomponenten (28, 30, 32) möglich ist.

6. Verfahren zur Abgasnachbehandlung nach einem der Ansprüche 1 bis 5, **dadurch gekennzeichnet, dass** ein Mischungsverhältnis von heißem Gas (54) und Abgas (52) des Verbrennungsmotors (10) gewählt wird, bei dem sich in der Reaktionszone (48) eine Temperatur von mindestens 650°C einstellt.

7. Abgasnachbehandlungssystem für einen Verbrennungsmotor (10) mit einer Abgasanlage (20), wobei in der Abgasanlage (20) ein erster Drei-Wege-Katalysator (28), stromabwärts des ersten Drei-Wege-Katalysators (28) ein NOx-Speicherkatalysator (30) und stromabwärts des NOx-Speicherkatalysators (30) ein Vier-Wege-Katalysator (32) oder ein Partikelfilter (62) angeordnet sind, und wobei an einem Abgaskanal (22) der Abgasanlage (20) stromabwärts des NOx-Speicherkatalysators (30) und stromaufwärts des Vier-Wege-Katalysators (32) oder des Partikelfilters (62)eine Einleitstelle (44) zur Einleitung eines durch einen Abgasbrenner (42) erzeugten heißen Gases (54) ausgebildet ist, **dadurch gekennzeichnet, dass** das Abgasnachbehandlungssystem ein Steuergerät (50) umfasst, wobei das Steuergerät (50) dazu eingerichtet ist, ein Verfahren nach einem der Ansprüche 1 bis 6 durchzuführen, wenn ein maschinenlesbarer Programmcode durch das Steuergerät (50) ausgeführt wird.

8. Abgasnachbehandlungssystem nach Anspruch 7, **dadurch gekennzeichnet, dass** in der Mischzone (46) ein Mischelement (56) angeordnet ist.

9. Abgasnachbehandlungssystem nach einem der Ansprüche 7 oder 8, **dadurch gekennzeichnet, dass** in der Mischzone (46) und/oder in der Reaktionszone (48) ein Element (64) zur Reduzierung der Strömungsgeschwindigkeit des Mischgases (58) angeordnet ist.

10. Abgasnachbehandlungssystem nach Anspruch 9, **dadurch gekennzeichnet, dass** der Abgaskanal (22) im Bereich der Reaktionszone (48) eine Querschnittsaufweitung (60) aufweist.

## Claims

1. A method for exhaust gas aftertreatment of a combustion engine (10), which is connected to an exhaust gas system (20) on the outlet side, wherein a first three-way catalytic converter (28), an NOx storage catalyst (30) downstream of the first three-way catalytic converter (28) and a four-way catalytic converter (32) or a particle filter (62) downstream of the NOx storage catalyst (30) are arranged in the exhaust gas system (20), wherein an entry point (44) for introducing a hot gas (54) generated by an exhaust gas burner (42) is formed on an exhaust gas duct (22) of the exhaust gas system (20) downstream of the NOx storage catalyst (30) and upstream of the four-way catalytic converter (32) or the particle filter (62), comprising the following steps:
- operating the combustion engine (10) with a fuel-air mixture at a substoichiometric air-fuel ratio (λ < 1),
- introducing the exhaust gases (52) of the combustion engine (10) into the exhaust gas duct (22),
- introducing a hot, oxygen-rich gas (54) at an entry point (44) into the exhaust gas duct (22), wherein the hot gas (54) is mixed with the exhaust gas (52) of the combustion engine (10) in a mixing zone (46), so that a stoichiometric or superstoichiometric exhaust gas establishes downstream of the mixing zone (46), and
- oxidation of the unburned exhaust gas components of the exhaust gas of the combustion engine (10) in a reaction zone (48) downstream of the mixing zone (46), wherein the unburned exhaust gas components are reacted with the residual oxygen in the mixed gas, wherein
- the NOx storage catalyst (30) is regenerated by the substoichiometric air-fuel ratio of the combustion engine (10).

2. The method for exhaust gas aftertreatment according to claim 1, **characterized in that** the substoichiometric air-fuel ratio is set during an enrichment in an acceleration phase or full load phase of the combustion engine.

3. The method for exhaust gas aftertreatment according to claim 1 or 2, **characterized in that** the substoichiometric operation is selected for the component protection of a component of the combustion engine (10) and/or the exhaust gas system (20).

4. The method for exhaust gas aftertreatment according to any of claims 1 to 3, **characterized in that** the method is performed in a cold start phase of the combustion engine (10), in which one catalyst (28, 30, 32) arranged in the exhaust gas system (20) has not yet reached its light-off temperature.

5. The method for exhaust gas aftertreatment according to claim 4, **characterized in that** introducing the hot gas (54) is deactivated as soon as exhaust gas aftertreatment by means of the exhaust gas aftertreatment components (28, 30, 32) is possible.

6. The method for exhaust gas aftertreatment according to any of claims 1 to 5, **characterized in that** a mixing ratio of hot gas (54) and exhaust gas (52) of the combustion engine (10) is selected at which a temperature of at least 650°C occurs in the reaction zone (48).

7. An exhaust gas aftertreatment system for a combustion engine (10) with an exhaust gas system (20), wherein a first three-way catalytic converter (28), an NOx storage catalyst (30) downstream of the first three-way catalytic converter (28) and a four-way catalytic converter (32) or a particle filter (62) downstream of the NOx storage catalyst (30) are arranged in the exhaust gas system (20), and wherein an entry point (44) for introducing hot gas (54) generated by an exhaust gas burner (42) is formed on an exhaust gas duct (22) of the exhaust gas system (20) downstream of the NOx storage catalyst (30) and upstream of the four-way catalytic converter (32) or the particle filter (62), **characterized in that** the exhaust gas aftertreatment system comprises a controller (50), wherein the controller (50) is configured to carry out a method according to any of claims 1 to 6 when a machine-readable program code is executed by the controller (50).

8. The exhaust gas aftertreatment system according to claim 7, **characterized in that** a mixing element (56) is arranged in the mixing zone (46).

9. The exhaust gas aftertreatment system according to one of claims 7 or 8, **characterized in that** an element (64) for reducing the flow rate of the mixed gas (58) is arranged in the mixing zone (46) and/or in the reaction zone (48).

10. The exhaust gas aftertreatment system according to claim 9, **characterized in that** the exhaust gas duct (22) has a cross-sectional widening (60) in the region of the reaction zone (48).

## Revendications

1. Procédé de post-traitement des gaz d'échappement d'un moteur à combustion interne (10), qui est relié côté sortie à une installation d'échappement (20), dans lequel un premier catalyseur à trois voies (28), un piège à NOx (30) en aval du premier catalyseur à trois voies (28) et un catalyseur à quatre voies (32) ou un filtre à particules (62) en aval du piège à NOx (30) sont disposés dans l'installation d'échappement (20), dans lequel un point d'introduction (44) pour l'introduction d'un gaz chaud (54) généré par un brûleur pour gaz d'échappement (42) est réalisé sur un conduit de gaz d'échappement (22) de l'installation d'échappement (20) en aval du piège à NOx (30) et en amont du catalyseur à quatre voies (32) ou du filtre à particules (62), comprenant les étapes suivantes :
- fonctionnement du moteur à combustion interne (10) avec un mélange d'air et de carburant avec un rapport d'air de combustion inférieur à la stœchiométrie (λ < 1),
- introduction des gaz d'échappement (52) du moteur à combustion interne (10) dans le conduit de gaz d'échappement (22),
- introduction d'un gaz chaud (54) riche en oxygène en un point d'introduction (44) dans le conduit de gaz d'échappement (22), le gaz chaud (54) se mélangeant avec les gaz d'échappement (52) du moteur à combustion interne (10) dans une zone de mélange (46), de telle sorte que des gaz d'échappement dans des proportions stœchiométriques ou supérieures à la stœchiométrie soient obtenus en aval de la zone de mélange (46) et
- oxydation des composants de gaz d'échappement non brûlés des gaz d'échappement du moteur à combustion interne (10) dans une zone de réaction (48) en aval de la zone de mélange (46), les composants de gaz d'échappement non brûlés étant transformés avec l'oxygène résiduel dans le mélange gazeux, dans lequel
- le piège à NOx (30) est régénéré par le rapport d'air de combustion inférieur à la stœchiométrie du moteur à combustion interne (10).

2. Procédé de post-traitement des gaz d'échappement selon la revendication 1, **caractérisé en ce que** le rapport d'air de combustion inférieur à la stœchiométrie est obtenu lors d'un enrichissement dans une phase d'accélération ou une phase à pleine charge du moteur à combustion interne.

3. Procédé de post-traitement des gaz d'échappement selon la revendication 1 ou 2, **caractérisé en ce que** le fonctionnement dans des proportions inférieures à la stœchiométrie est choisi pour la protection de pièce d'une pièce du moteur à combustion interne (10) et/ou de l'installation d'échappement (20).

4. Procédé de post-traitement des gaz d'échappement selon l'une quelconque des revendications 1 à 3, **caractérisé en ce que** le procédé est exécuté dans une phase de démarrage à froid du moteur à combustion interne (10), dans laquelle un catalyseur (28, 30, 32) disposé dans l'installation d'échappement (20) n'a pas encore atteint sa température d'amorçage.

5. Procédé de post-traitement des gaz d'échappement selon la revendication 4, **caractérisé en ce que** l'introduction du gaz chaud (54) est désactivée dès qu'un post-traitement des gaz d'échappement est possible au moyen des composants de post-traitement des gaz d'échappement (28, 30, 32).

6. Procédé de post-traitement des gaz d'échappement selon l'une quelconque des revendications 1 à 5, **caractérisé en ce qu'**un rapport de mélange de gaz chaud (54) et de gaz d'échappement (52) du moteur à combustion interne (10) est choisi, pour lequel une température d'au moins 650 °C est obtenue dans la zone de réaction (48).

7. Système de post-traitement des gaz d'échappement pour un moteur à combustion interne (10) avec une installation d'échappement (20), dans lequel un premier catalyseur à trois voies (28), un piège à NOx (30) en aval du premier catalyseur à trois voies (28) et un catalyseur à quatre voies (32) ou un filtre à particules (62) en aval du piège à NOx (30) sont disposés dans l'installation d'échappement (20) et dans lequel un point d'introduction (44) pour l'introduction d'un gaz chaud (54) généré par un brûleur pour gaz d'échappement (42) est réalisé sur un conduit de gaz d'échappement (22) de l'installation d'échappement (20) en aval du piège à NOx (30) et en amont du catalyseur à quatre voies (32) ou du filtre à particules (62), **caractérisé en ce que** le système de post-traitement des gaz d'échappement comprend un appareil de commande (50), l'appareil de commande (50) étant configuré pour exécuter un procédé selon l'une quelconque des revendications 1 à 6, quand un code de programme lisible par une machine est exécuté par l'appareil de commande (50).

8. Système de post-traitement des gaz d'échappement selon la revendication 7, **caractérisé en ce qu'**un élément mélangeur (56) est disposé dans la zone de mélange (46).

9. Système de post-traitement des gaz d'échappement selon l'une quelconque des revendications 7 ou 8, **caractérisé en ce qu'**un élément (64) pour réduire la vitesse d'écoulement du mélange gazeux (58) est disposé dans la zone de mélange (46) et/ou dans la zone de réaction (48).

10. Système de post-traitement des gaz d'échappement selon la revendication 9, **caractérisé en ce que** le conduit de gaz d'échappement (22) présente un élargissement de section transversale (60) au niveau de la zone de réaction (48).
